# EUROPEAN PATENT SPECIFICATION

(11) **EP 4 023 623 B1**
(45) Date of publication and mention of the grant of the patent: **19.11.2025**
(21) Application number: 21150191.1
(22) Date of filing: 05.01.2021
(51) Int. Cl.: C05F 17/40, C05F 17/60, C05F 17/80, C05F 17/90, C05F 17/00, A43B 1/00

(54) **COMPOSTING PROCESS**
KOMPOSTIERVERFAHREN
PROCÉDÉ DE COMPOSTAGE

(43) Date of publication of application: 06.07.2022
(73) Proprietor: Krolk Holding AG, 6300 Zug (CH)
(72) Inventor: Jolliffe, John, 90556 Cadolzburg (DE); Solk, David, 90556 Cadolzburg (DE)
(74) Representative: Bringer IP

(56) References cited:
- EP-A1- 2 540 182
- WO-A1-2018/145175
- CN-B- 106 278 761
- GB-A- 487 837
- US-A1- 2020 216 760

## Description

### TECHNICAL FIELD

The present technology is generally related to a composting process for manufactured items such as footwear.

### BACKGROUND

Consumers around the world buy an estimated 14.5 billion to 19 billion pairs of footwear per year, roughly equating to having two pairs per every person on the planet. As the population of the earth grows, so too will the number of footwear and associated products that are manufactured and sold. Due to the mix of materials used in the production process for footwear, for example, and the cost and complexity of material recovery, there is currently no viable economic benefit for a large scale recovery business model. Many types of such mixed use items are historically disposed of in landfills, where they will stay essentially intact for decades to hundreds of years. Industries other than footwear have similar problems with manufactured products adding to an ever increasing amount of landfill waste.

Accordingly, a need exists for a sustainable and circular method to end single use of products and reduce landfill wastes of this type. While some prior efforts have been made to divert footwear and other waste from landfills, many companies have simply converted the product into a lower value 're-grind' commodity, which still remains essentially non-compostable material.

Accordingly, it is desirable to provide sustainable processes and systems for manufacturing and recycling manufactured products such as footwear. In addition, it is desirable to provide a circular approach, involving a reassessment of the raw materials going into the making of the manufactured product, allowing them to be successfully composted at the end of the product's lifecycle, such as disclosed in WO 2018/145175 A1. EP 2 540 182 A1 discloses a method for composting organic matter comprising compostable mass of shoes. For economic viability, composting of the manufactured product should be relatively quick and efficient. Furthermore, other desirable features and characteristics will become apparent from the subsequent detailed description and the appended claims, taken in conjunction with the accompanying drawings and the foregoing technical field and background.

### BRIEF SUMMARY

In one aspect, the present disclosure provides a manufactured products composting process, comprising receiving manufactured products made of compostable materials, pulverizing the manufactured products to provide a coarse slurry including the pulverized manufactured products, autoclaving the coarse slurry in an autoclaving apparatus, mixing the autoclaved coarse slurry and organic matter to provide humus, and composting the humus in a composting apparatus to produce compost, according to claim 1.

The process of the present disclosure ensures that manufactured products is made of compostable materials, is pulverized into small fragments and is sterilized prior to composting. This combination of steps has been found to ensure a biologically acceptable compost is produced in a quick and efficient manner.

The pulverizing is performed hydraulically or mechanically. In embodiments, the pulverizing is performed by water jet pulverizing or by a granulator.

In embodiments, the pulverizing is performed by a pulverizing apparatus including mechanical grinding.

The pulverizing produces manufactured products fragments of a particle size whereby at least 80%, by weight, of the manufactured products fragments pass through a sieve having a 3mm mesh size.

In embodiments, the process comprises a foreign object detection and removal stage for removing manufactured products from the subsequent process or for removing parts of manufactured products from the coarse slurry, and thus from the subsequent process, that include foreign objects that are not compostable. The foreign object detection and removal stage may include a metal detector.

In embodiments, the process comprises a screening stage that separates any manufactured products fragments greater than a predetermined size from the compost and feeding the separated manufactured products fragments back through the pulverizing, autoclaving and composting steps.

In embodiments, the method includes a manufactured products verification stage that verifies each of the manufactured products as being of a kind made of compostable materials.

In embodiments, the process is a batch process and each batch of compost produced is tested for seedling growth.

In embodiments, a time from pulverizing the manufactured products to producing the compost is 12 weeks or less.

The process further comprises manufacturing manufactured products of compostable materials, selling the manufactured products to end customers, receiving the manufactured products from the end customers after they have been worn, pulverizing the manufactured products to provide a coarse slurry including the pulverized manufactured products, autoclaving the coarse slurry in an autoclaving apparatus, mixing the autoclaved coarse slurry and organic matter to provide humus, and composting the humus in a composting apparatus to produce compost.

In embodiments, the process includes physically associating a readable identifier with the manufactured products at the manufacturing step, maintaining a database of the identifiers physically associated with the compostable manufactured products, a manufactured products verification stage that reads the identifier of each of the manufactured products when the identifier is present and verifies that the read identifier is included in the database. The manufactured products verification stage is after the receiving step and before the pulverizing step. The process includes removing manufactured products that cannot be verified by the manufactured products verification stage prior to the pulverizing step.

In embodiments, the pulverizing is performed by water jet pulverizing.

In embodiments, a time from pulverizing the manufactured products to producing the compost is 12 weeks or less.

In a yet further apparatus, a manufactured products composting system is provided that comprises a pulverization apparatus for pulverizing manufactured products into a coarse slurry including manufactured products fragments, an autoclaving apparatus for autoclaving the coarse slurry, a pre-mixing stage for mixing the autoclaved coarse slurry and organic matter to produce a humus, and a composting apparatus for composting the humus, thereby providing compost, according to claim 12.

The manufactured products include or consist of one or more of footwear, clothing and apparel.

The details of one or more aspects of the disclosure are set forth in the accompanying drawings and the description below. Other features, objects, and advantages of the techniques described in this disclosure will be apparent from the description and drawings, and from the claims.

### BRIEF DESCRIPTION OF THE DRAWINGS

FIG. 1 is a system for composting, in accordance with an embodiment of the present disclosure; and
FIG. 2 is a method for composting, in accordance with an embodiment of the present disclosure.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The present disclosure provides systems and methods for end of usable life processing of manufactured products, which allows products to become high quality compost, within a prescribed and commercially viable timeframe. In this way, the product(s) can be considered to have a circular lifecycle, with far less environmental impact than is currently available from traditional products disposed of as traditional consumer wastes, such as in landfills. An end goal is to greatly lower the impact of manufactured products on the environment. The systems and methods described herein create a novel end of usable life composting system, which will first rapidly break down the product into increasingly smaller fragments, which are then rendered sterile, before finally being added to a composting system, which may include an inert component (carbon based) and bio-active component (nitrogen based). The compost created by systems and methods described herein is of an inert nature.

In systems and methods of the present disclosure, incoming manufactured products are made from materials that are suitable for composting at the end of their usable lifecycle. The materials that make up such products can be one or more of: a. natural, normally compostable organic materials; b. Materials that have been specifically manufactured to be compostable, such as specialized bioplastic; and c. other specified materials, such as could be found in a specially developed database, providing manufacturers a way to arrange the product's construction/design to conform to the circular composting model. At the end of a usable lifespan, manufactured products are returned to a dedicated processing facility, whereby a multistage process is employed to make such products fundamentally repurposed for composing. The multistage process includes pulverizing, autoclaving and composting.

The following detailed description is framed in terms of footwear composting as an exemplary, but highly relevant, use case. However, any manufactured product made of compostable materials can realize the advantages of being composted by the processes and systems described herein. Additional relevant manufactured products include compostable clothing and compostable apparel. It should be appreciated that there is a move towards use of compostable materials for manufacturing products in many industries including footwear, clothing and clothing accessories. Examples of compostable products that are already on the market include cutlery kits, carrier bags, cups, bottles, other packaging, jewelry and accessories, clothing, rugs, towels, pens, toothbrushes, computer and phone cases, as just some examples. It is expected that the list of manufactured products that are wholly compostable will increase as the drive towards eco-friendliness and sustainability gathers pace.

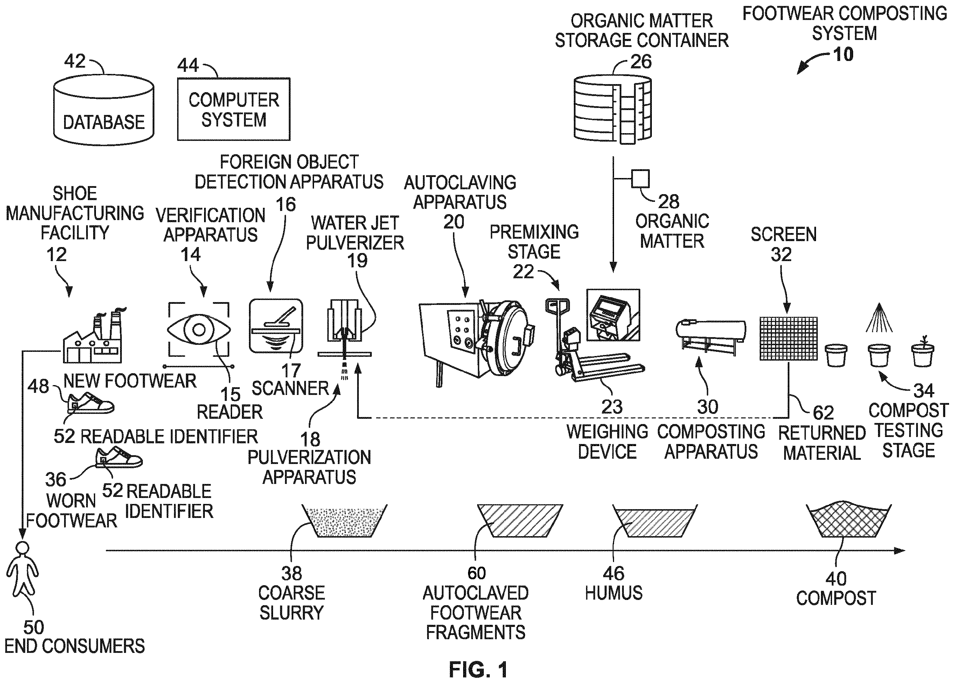

FIG. 1 depicts, schematically, a footwear composting system 10, in accordance with an embodiment of the present disclosure. The footwear composting system 10 includes a series of stages at which worn footwear 36 are progressively processed into compost 40. The stages of the footwear composting system include a verification apparatus 14, a foreign object detection apparatus 16, an autoclaving apparatus 20, a premixing stage 22, a composting apparatus 30, a screening stage including a screen 32 and a compost testing stage 34. The footwear composting system 10 further includes a footwear manufacturing facility in one embodiments, which is associated with a database 42 and a computer system 44.

The worn footwear 36 are received by the footwear composting system 10. The worn footwear 36 are made of compostable materials (except for any non-compostable foreign objects that may or may not be present). A range of compostable footwear are emerging in public markets such as biodegradable sneakers produced by footwear company Native Footwear. According to literature available from the Native Footwear company, the footwear will only begin to breakdown during a composting process after 45 days. This suggests that effective composting will take many months, which may not be viable for a central industrial composting process as proposed herein. In one embodiment, the worn footwear 36 are made wholly of materials that meet the criteria for compostable products set by ASTM standards specification D6400. A compostable plastic undergoes degradation by biological processes during composting to yield CO₂, water, inorganic compounds and biomass at a rate consistent with other known compostable materials and that leaves no visible, distinguishable or toxic residue.

Exemplary compostable plastics includes Polyactic Acid (PLA), Polyhydrozy Fatty Acids (PHA) (e.g. plastics made from anerobic digestion of starch), thermoplastic (complexed) starch, etc. In general, compostable materials may be cellulose based, cotton based, polymeric, animal based, and combinations thereof. Compostable cotton and cotton compositions include 100% cotton, recycled cotton, canvas, etc. Cotton compositions are generally recognized as compostable, if such compositions are verified as pure by respective suppliers. Examples include craft board, cotton and banana husk, cotton, Chitosan, cotton and hemp, cotton and paper, coated canvas, etc. Exemplary compostable cellulose and cellulosic compositions include 100% hemp, 100% Tencel^{®}, coconut husk, cork, jute, various papers, wood, etc. Cellulosic compositions are generally recognized as compostable, if such compositions are verified as pure by respective suppliers. Examples may include laminations or battings of cork, jute and felt. Exemplary compostable Polylactic Acid (PLA) and other bio-based polymeric compositions include 100% PLA products, parts, biodegradable hot melt adhesives, etc. Only bio-based plastics that are of a compostable grade are suitable for composting as understood herein. PLA compositions are generally recognized as compostable, if such compositions are verified by respective suppliers. Examples may include PLA and cotton and fleece, PLA and hemp and felt and fleece, PLA films, other bioplastics or adhesives, etc. Exemplary compostable animal based materials and animal based compositions include animal fibers generally recognized as compostable including wool, cashmere, horsehair, angora, silk, etc. Animal fibers in compositions are generally recognized as compostable, if such compositions are suitably combined with other materials in the product's makeup that are recognized as being compostable.

The worn footwear 36 can be of any of a variety of footwear kinds including boots, shoes, athletic footwear, court footwear, loafers, plimsolls, sandals, galoshes and all other types of footwear. The worn footwear 36 includes at least a sole having an upper surface for receiving the sole of the foot of an end consumer 50. Further, a heel and/or a toe and/or a tongue and/or a fastening mechanism may be included in the worn footwear 36. An underside of the worn footwear 36 may include a tread when new for grip.

In one embodiment, a shoe manufacturing facility 12 produces new footwear 48 that are sold to end consumers 50. The shoe manufacturing facility 12 produces the new footwear exclusively of compostable materials. The shoe manufacturing facility may include in the new footwear 48 a readable identifier 52. The readable identifier 52 may be included on the new footwear 48 themselves such as by stitching a label including the readable identifier 52 into the new footwear 52, by embedding the readable identifier into a body of the new footwear 52, by disposing (such as printing or direct stitching) the readable identifier 52 on an outside surface of the new footwear 52 (such as an underside of the sole),etc. The readable identifier 52 may be a wirelessly readable identifier such as an optically readable encoded identifier (e.g. a bar code or a QR code), an optically readable identifier that may not be encoded (e.g. an alphanumeric identifier) such as one printed in UV ink, other invisible ink or visible characters, a radiation emitting identifier such as an RFID tag or any other machine readable identifier. The readable identifier 52 encodes a unique identifier for each pair of new footwear 52 or for each model of new footwear 52. The readable identifier 52 is included in the database 42. In one embodiment, the readable identifier 52 is provided by three-dimensional design (e.g. shape and color) characteristics of the shoe that are machine identifiable. Such characteristics can be included in the database 42. A purpose of the readable identifier 52 and the database 42 of readable identifiers is to allow efficient verification that received worn footwear 36 is made of compostable materials, as required.

In some embodiments, the shoe manufacturing facility 12 packages the new footwear 48 made of compostable materials with instructions for returning the worn footwear 36 to a composting system. The instructions may include one or more addresses of central composting facilities that compost footwear in accordance with the systems and methods described herein. The packaging for the new footwear 48 may even include postage pre-paid package to encourage all end consumers 50 to return their worn footwear 36.

In embodiments, the verification apparatus 14 includes a reader 15 for machine reading of the readable identifier 52. The reader 15 may be an optical reader (e.g. a camera), an emissions receiver (such as an RFID tag receiver) or any other type of reader 15 for complementing the readable identifier 52. In one embodiment, the reader 15 is a camera that captures images of the worn footwear 36 and associated software for identifying a type of footwear based on derived design characteristics (e.g. shape and/or size). In another embodiment, the reader 15 is a QR or barcode or alphanumeric character reader. As such, the reader 15 identifies a unique code for each model or pair of worn footwear 36, which can be cross-referenced with the database 42 to ascertain whether the worn footwear 36 is made of compostable materials. Any non-verified worn footwear 36 can be rejected and removed from further compost processing and diverted to alternative disposal processing such as incineration. The removal of non-verified worn footwear 36 can be performed manually or by robot. In alternative embodiments, the verification stage can be carried out manually by trained verification staff. A manual implementation will depend on the volume of worn footwear 36 that is being processed per hour for viability reasons. In such a case, a specific readable identifier 52, and corresponding database entry, are not required.

In the verification stage, returned worn footwear are inspected by machine or manually to ensure they come from a verified compostable range of materials, and have no obvious alterations or modifications that could impact compost viability. In some embodiments, a record is made of unique identifier for the worn footwear 36 and a compost batch number in the database 42 or another database, thereby keeping a recording of each pair of footwear 36 that has been composted for a particular batch of compost.

In embodiments, the foreign object detection apparatus 16 is configured to identify any foreign objects in the worn footwear 36. The foreign object detection apparatus 16 includes a scanner 17 such as a metal detector, an optical scanner (e.g. a camera), an infrared imaging device, an x-ray detection device and/or other detector. A metal detector is particularly preferred for the scanner 17. The scanner 17 is tuned to detect foreign objects such as metallic objects that have been added to the worn footwear 36. For an optical scanner, the scanner 17 may have access to visual characteristics of the worn footwear 36 from the database 42 or be associated with machine learning software to identify anomalies indicative of foreign objects. The foreign objects may be removed at the verification stage or the worn footwear including the foreign object (e.g. metallic) may be removed. Removed footwear may be sent to an incinerator or other disposal system.

In some embodiments, the worn footwear 36 is passed through a powerful metal detector to ensure no foreign objects have been added or inserted. Rejected worn footwear 36 is sent for waste to heat recovery (incineration) as an example alternative to composting. It should be appreciated that the verification and foreign object detection stages may be reversed in order or combined into a single stage or one or both of these stages may be removed from the footwear composting system 10.

The pulverization apparatus 18 pulverizes the worn footwear 36 into footwear fragments or granules. The worn footwear 36 is pulverized into footwear fragments by which at least 80% (or at least 90%), by weight, of the footwear fragments have a particle size of 3mm, 2.5mm, 2mm or 1.5mm or less by sieve analysis. The pulverization apparatus 18 thus creates particles sizes similar to coarse and very coarse sand, which has been found to improve the efficiency of composting of worn footwear 36. In one embodiment, the pulverization apparatus 18 applies one or more fluid jets and thus works hydraulically. In some embodiments, a plurality of fluid jets from respective nozzles are utilized to wear away the worn footwear 36 into fragments/granules. The fluid jets may be air jets or water or other liquid jets. In the depicted embodiment, the pulverization apparatus 18 is a water jet pulverizer 19 that includes one or more water jet nozzles. The fluid jet or jets utilize ultra-high pressure to pulverize the worn footwear 36. In one example, one or more fluid jet cutting/pulverizing heads apply fluid (e.g. water) jets at a pressure equal to, or in excess of, 500 Bar, or approximately 7,252 PSI pressure. Although water jet pulverization may be preferred, there are a range of other suitable pulverization machines available on the market in other technical fields that operate in other ways such as mechanical pulverization. For example, grinding and crushing machines may be used. In some embodiments, a combination of fluid jet and mechanical pulverization processes may be used to achieve the requisite fineness of the footwear fragments/granules. The footwear fragments/granules may be mixed with water as part of the pulverization stage for enhanced breakdown efficiency, especially when water jet pulverization is to be used. In this way, a coarse slurry 38 of water and footwear fragments is produced by the pulverization apparatus 18.

In one example embodiment, the pulverization apparatus 18 operates on worn footwear 36 loaded onto one or more wooden fixtures. The worn footwear 36 is processed by a water jet pulverizing machine 19, which reduces the worn footwear 36 to a course slurry 38 of compostable materials. The coarse slurry 38 is accumulated in a collection tank of the pulverization apparatus, which can be removed for further processing. In the present embodiment, wooden fixtures are used so that any cross contamination of the coarse slurry 38 during the pulverizing process is also of a compostable nature. It has been found that ultrafine pulverization allows for more rapid and more complete composting versus larger particles which will take longer to break down.

The coarse slurry 38 is delivered to an autoclaving apparatus 20 for sterilization. The coarse slurry 38 is subjected to elevated temperatures and pressures as compared to ambient pressure and temperature, such that the coarse slurry 38 is subjected to pressurized, saturated steam for at least 15 minutes. The autoclaving apparatus 20 may cause the water in the coarse slurry 38 to boil and sterilizes the footwear fragments. The autoclaving stage may utilize an electrically heated autoclaving apparatus 20, with a working temperature equal to or above 105° Celsius (e.g. equal to or above 110°C, 115°C or 120°C). Sterilization indicator tape may be utilized to gauge when the coarse slurry 38 has reached the desired temperature.

In one embodiment, a collection tank containing the coarse slurry 38 is removed from the pulverization apparatus 18 and placed inside the autoclaving apparatus 20 for sterilization. The autoclaving process uses high pressure and superheated steam to boil the water in the slurry and sterilize the footwear fragments. The high temperatures and pressurization employed further reduce the particle size of the footwear fragments in the coarse slurry 38, as bonds holding the materials together breakdown.

In embodiments, the autoclaved footwear fragments 60 taken from the autoclaving apparatus 20 are delivered to a pre-mixing stage 22. At the pre-mixing stage 22, organic matter 26 from one or more organic matter storage containers 26 is mixed with the autoclaved footwear fragments at a defined weight ratio. The coarse slurry 38 may be dried or drained after the autoclaving stage so as to produce the autoclaved footwear fragments/granules 60. The weight ratio can be measured using a weighing device 23. The organic matter can be any of traditional organic matter added during conventional composting processes. For example, a humus 46 may be prepared at the premixing stage 22 including the autoclaved footwear fragments 60, grass cuttings, coffee grounds, horse manure and dry wood chippings. In various embodiments, the organic matter is present in a majority by weight relative to the autoclaved footwear fragments 60 in the humus 46. Accordingly, in the premixing stage 22, the warm slurry taken from the autoclaving apparatus 20 is weighed, and mixed with the correct ratio of organic matter 28, to ensure a quality humus 46 is produced during composting. The organic matter 28 can include, without limitation, any of leaves, grass clippings, brush trimmings, manure (preferably organic), non-animal food scraps: such as fruits, vegetables, peelings, bread, cereal, coffee grounds and filters, tea leaves and tea bags.

In embodiments, the humus 46 from the premixing stage 22 is supplied to a composting apparatus 30 for composting. The composting apparatus 30 includes, in some embodiments, a motorized mixer, an air pump (optional), an organic matter and/or water dosing pump, a heater and a control system. The control system controls the heating, mixing, hydration and aeration of the humus 46 inside the composting apparatus 30 to optimal conditions for ensuring the efficiency of the composting. The humus 46 from the premixing stage 22 is loaded into the composting apparatus 30. The composting apparatus 30 has sensors and the control system for monitoring and maintaining adequate hydration and proper aeration of the mixture by regularly turning the mixture, encouraging the growth of fungi so that all the feedstock is full broken down within a minimal time frame. The composting apparatus 30 may be continuous so that compost 40 is regularly discharged from the composting apparatus and so that new humus 46 can be regularly added into the composting apparatus 30. One exemplary composting apparatus 30 is the Rocket A900 available from Tidy Planet Limited.

In embodiments, after processing, the compost 40 is inspected, and any large fragments will be returned to the start of the process for a second round of composting. That is, after screening for the size of the fragments, returned material 62 is delivered to at or before the pulverization stage so as to re-processed through the pulverization, autoclaving, premixing and composting stages. In one embodiment, a mesh screen 32 is utilized to sort out larger fragments to be designated as the returned material 62. For example, a 3mm screen may be used. In other embodiments, the larger fragments can be found by hand or by a robot using a vision system to inspect the compost.

In embodiments, terrestrial plant testing is included in the compost testing stage 34. The compost testing stage 34 checks every batch for seedling emergence and growth in the composted material. The compost testing stage further verifies biodegradation of the feedstock and ensures that the compost is non-toxic. The finished batch will be labeled with a unique identification number which may be stored in the database 42 or another database for longterm traceability purposes. There are a variety of methods for testing seedling emergence and growth and toxicity of compost. One suitable method is the OECD (Organisation for Economic Co-operation and Development) test 208 (Terrestrial Plant Test: Seedling Emergence and Seedling Growth Test), which determines a compost as being valid when seedling emergence is at least 70%, the seedlings do not exhibit visible phytotoxic effects (e.g. chlorosis, necrosis, wilting, leaf and stem deformations) and the plants exhibit only normal variation in growth and morphology for that particular species, the mean survival of emerged control seedlings is at least 90% for the duration of the study, and environmental conditions for a particular species are identical and growing media contain the same amount of soil matrix, support media, or substrate from the same source.

In accordance with the present disclosure, it is expected that the process from the pulverization stage to the compost 40 from the composting apparatus 30 will take 12 weeks or less, 11 weeks or less or 10 weeks or less.

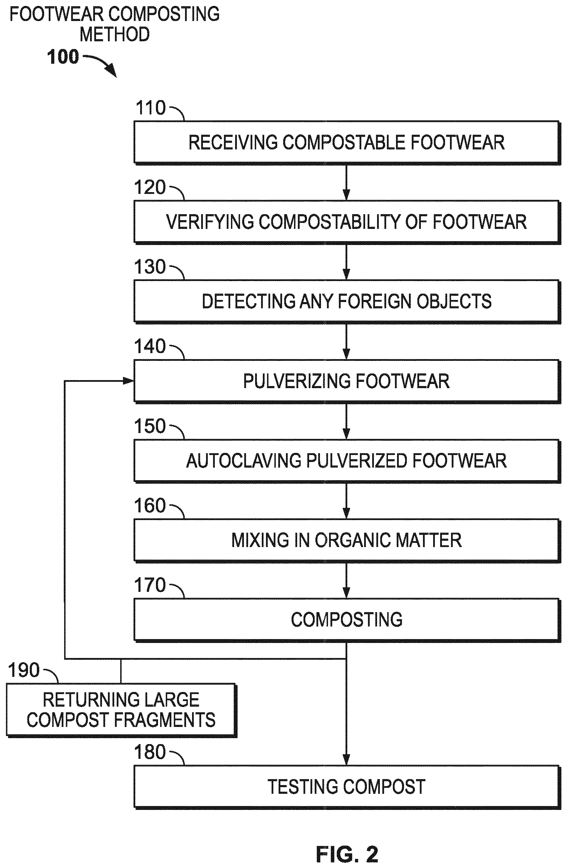

According to the present disclosure, a footwear composting method 100 is provided in the exemplary embodiment of FIG. 2. The footwear composting method 100 includes receiving compostable footwear 36 at a central footwear composting facility. Method 100 includes verifying the composability of the footwear 36, which may involve reading an identifier 52 or identifying the model of the footwear 36 using a computer vision system, in association with looking up a database 42 of compostable footwear 36. In step 120, any foreign objects (such as metal) are detected and removed from the footwear 36. This step may be performed by a metal detector or by a computer vision system trained to recognize foreign objects.

In step 140 the footwear 36 is pulverized in a pulverization apparatus 18. In one embodiment, the pulverization apparatus 18 is a water jet pulverizer 19, but it may additionally, or alternatively, include mechanical grinding. The pulverized footwear is optimally predominately of a granule size of coarse sand, sand or fine sand or smaller as a result of the pulverization step 140. The pulverized footwear may be mixed with water to form a coarse slurry 38.

In step 150, the pulverized footwear is autoclaved in an autoclaving apparatus 20 for sterilization. The autoclaved footwear fragments 60 are discharged from the autoclaving apparatus 20. In step 160, organic matter 28 suitable for composting is mixed in with the autoclaved footwear fragments according to a defined weight ratio and sent to a composting apparatus 30. In step 170, the mixed material is composted in the composting apparatus 30. During step 170, compost 40 is produced in a contained environment in which mixing (and thus aeration), humidity and temperature are machine controlled.

In step 190, any large fragments in the compost 40 are returned to be pulverized in step 140 and passed through the subsequent processing steps of method 100. In step 180, the compost 40 is tested for acceptable toxicity and efficacy in terms of promoting growth of plants. Assuming the compost 40 is found to be acceptable, each batch is packaged and used in agriculture. Further, a record is kept in a database for each batch as to the test results, and optionally also the identifiers of the footwear 36 and optionally also the organic matter 28 added and any other relevant conditions of the method 100 for traceability reasons.

It should be understood that various aspects disclosed herein may be combined in different combinations than the combinations specifically presented in the description and accompanying drawings. It should also be understood that, depending on the example, certain acts or events of any of the processes or methods described herein may be performed in a different sequence, may be added, merged, or left out altogether (e.g., all described acts or events may not be necessary to carry out the techniques).

While at least one exemplary embodiment has been presented in the foregoing detailed description, the present disclosure is not limited to compostable footwear, even if it is primarily described in that context. The teachings of the present disclosure are applicable to composting of clothing and apparel, however, composting of any compostable manufactured product is outside the scope of this invention.

## Claims

1. A manufactured products composting process, comprising:
receiving manufactured products made of compostable materials;
pulverizing the manufactured products to provide a coarse slurry including the pulverized manufactured products;
autoclaving the coarse slurry in an autoclaving apparatus, wherein the autoclaving step comprises application of pressurized, saturated steam for at least 15 minutes;
mixing the autoclaved coarse slurry and organic matter to provide humus; and composting the humus in a composting apparatus to produce compost,
wherein the manufactured products include one or more of footwear, clothing and apparel, and
wherein the pulverizing is performed hydraulically or mechanically,
so as to produce manufactured products fragments having a particle size whereby at least 80%, by weight, of the manufactured products fragments pass through a sieve having a 3mm mesh size.

2. The manufactured products composting process of Claim 1, wherein the pulverizing is performed by water jet pulverizing or by a granulator.

3. The manufactured products composting process of Claim 1, wherein the pulverizing is performed by a pulverization apparatus including mechanical grinding.

4. The manufactured products composting process of Claim 1, comprising a foreign object detection and removal stage for removing manufactured products from the subsequent process or for removing parts of manufactured products from the slurry that include foreign objects that are not compostable.

5. The manufactured products composting process of Claim 4, wherein the foreign object detection and removal stage includes a metal detector.

6. The manufactured products composting process of Claim 1, comprising a screening stage that separates any manufactured products fragments greater than a predetermined size from the compost and feeding the separated manufactured products fragments back through the pulverizing, autoclaving and composting steps.

7. The manufactured products composting process of Claim 1, comprising a manufactured products verification stage that verifies each of the manufactured products as being of a kind made of compostable materials.

8. The manufactured products composting process of Claim 1 being a batch process, wherein each batch of compost produced is tested for seedling growth..

9. The manufactured products composting process of claim 1, comprising:
manufacturing said manufactured products of compostable materials.

10. The manufactured products composting process of Claim 9, comprising:
physically associating a readable identifier with the manufactured products at the manufacturing step;
maintaining a database of the identifiers physically associated with the compostable manufactured products;
a manufactured products verification stage that reads the identifier of each of the manufactured products when the identifier is present and verifies that the read identifier is included in the database, wherein the manufactured products verification stage is after the receiving step and before the pulverizing step; and
removing manufactured products that cannot be verified by the manufactured products verification stage prior to the pulverizing step.

11. The manufactured products life cycle process of Claim 9, wherein the pulverizing is performed by water jet pulverizing.

12. A manufactured products composting system, comprising:
a pulverization apparatus for pulverizing manufactured products into a coarse slurry including manufactured products fragments;
an autoclaving apparatus for autoclaving the coarse slurry, wherein the autoclaving step comprises application of pressurized, saturated steam for at least 15 minutes;
a pre-mixing stage for mixing the autoclaved coarse slurry and organic matter to produce a humus; and
a composting apparatus for composting the humus, thereby providing compost,
wherein the manufactured products include one or more of footwear, clothing and apparel,
and wherein said pulverization apparatus is a hydraulically or mechanically performed pulverization apparatus, said produced manufactured products fragments having a particle size whereby at least 80%, by weight, of the manufactured products fragments pass through a sieve having a 3mm mesh size.

## Patentansprüche

1. Verfahren zum Kompostieren von gefertigten Produkten, welches umfasst:
Empfangen von gefertigten Produkten aus kompostierbaren Materialien;
Zerkleinern der gefertigten Produkte, um eine grobe Aufschlämmung zu erhalten, die die zerkleinerten gefertigten Produkte enthält;
Autoklavieren der groben Aufschlämmung in einer Autoklavieranlage, wobei der Autoklavierschritt das Aufbringen von unter Druck stehendem, gesättigtem Dampf für mindestens 15 Minuten umfasst;
Mischen der autoklavierten groben Aufschlämmung und organischer Substanz, um Humus zu erhalten; und Kompostieren des Humus in einer Kompostierungsvorrichtung, um Kompost herzustellen,
worin die gefertigten Produkte eines oder mehrere umfassen von Schuhen, Kleidung und Bekleidung, und
wobei das Zerkleinern hydraulisch oder mechanisch durchgeführt wird, um Fragmente der gefertigten Produkte mit einer Partikelgröße zu erzeugen, wobei mindestens 80 Gew.-% der Fragmente der gefertigten Produkte durch ein Sieb mit einer Maschenweite von 3 mm hindurchgehen.

2. Kompostierungsverfahren für gefertigte Produkte nach Anspruch 1, wobei das Zerkleinern durch Wasserstrahlzerkleinerung oder durch einen Granulator durchgeführt wird.

3. Kompostierungsverfahren für gefertigte Produkte nach Anspruch 1, wobei die Zerkleinerung durch eine Zerkleinerungsvorrichtung einschließlich mechanischem Mahlen durchgeführt wird.

4. Kompostierungsverfahren für gefertigte Produkte nach Anspruch 1, welches einen Schritt zum Erkennen und Entfernen von Fremdkörpern umfasst, um gefertigte Produkte aus dem nachfolgenden Verfahren zu entfernen oder Teile von gefertigten Produkten aus der Aufschlämmung zu entfernen, die nicht kompostierbare Fremdkörper enthalten.

5. Kompostierungsverfahren für gefertigte Produkte nach Anspruch 4, wobei der Schritt zum Erkennen und Entfernen von Fremdkörpern einen Metalldetektor umfasst.

6. Kompostierungsverfahren für gefertigte Produkte nach Anspruch 1, welches eine Siebstufe umfasst, die alle Fertigproduktfragmente, die größer als eine bestimmte Größe sind, aus dem Kompost abscheidet und die abgeschiedenen Fertigproduktfragmente erneut den Schritten des Zerkleinerns, Autoklavierens und Kompostierens zuführt.

7. Kompostierungsverfahren für gefertigte Produkte nach Anspruch 1, welches eine Fertigproduktüberprüfungsstufe umfasst, die jedes der gefertigten Produkte überprüft, aus kompostierbaren Materialien hergestellt zu sein.

8. Kompostierungsverfahren für gefertigte Produkte nach Anspruch 1, welches ein Chargenverfahren ist, bei dem jede produzierte Kompostcharge auf Keimlingswachstum getestet wird.

9. Kompostierungsverfahren für gefertigte Produkte nach Anspruch 1, welches umfasst:
Herstellung der gefertigten Produkte aus kompostierbaren Materialien.

10. Kompostierungsverfahren für gefertigte Produkte nach Anspruch 9, welches umfasst:
physisches Verbinden einer lesbaren Kennung mit den gefertigten Produkten im Herstellungsschritt;
Führen einer Datenbank mit den physisch mit den kompostierbaren gefertigten Produkte verbundenen Kennungen;
Überprüfungsphase für die hergestellten Produkte, in der die Kennung jedes der gefertigten Produkte gelesen wird, wenn die Kennung vorhanden ist, und überprüft wird, ob die gelesene Kennung in der Datenbank enthalten ist, wobei die Überprüfungsphase für die hergestellten Produkte nach dem Empfangsschritt und vor dem Zerkleinerungsschritt stattfindet; und
Entfernen von hergestellten Produkten, die in der Überprüfungsphase für die hergestellten Produkte nicht überprüft werden können, vor dem Zerkleinerungsschritt.

11. Lebenszyklusprozess für hergestellte Produkte nach Anspruch 9, wobei das Zerkleinern durch Wasserstrahlzerkleinern durchgeführt wird.

12. Kompostierungssystem für gefertigte Produkte, welches umfasst:
eine Zerkleinerungsvorrichtung zum Zerkleinern von gefertigten Produkten zu einer groben Aufschlämmung, die Fragmente der gefertigten Produkte enthält;
eine Autoklavierungsvorrichtung zum Autoklavieren der groben Aufschlämmung, wobei der Autoklavierungsschritt die Anwendung von unter Druck stehendem, gesättigtem Dampf für mindestens 15 Minuten umfasst;
eine Vormischstufe zum Mischen der autoklavierten groben Aufschlämmung und organischer Substanz, um Humus zu erzeugen; und
eine Kompostierungsvorrichtung zum Kompostieren des Humus, wodurch Kompost bereitgestellt wird,
worin die hergestellten Produkte eines oder mehrere der folgenden Produkte umfassen: Schuhe, Kleidung und Bekleidung, und
worin die Zerkleinerungsvorrichtung eine hydraulisch oder mechanisch betriebene Zerkleinerungsvorrichtung ist, worin die erzeugten Fragmente der gefertigten Produkte eine Partikelgröße aufweisen, wodurch mindestens 80 Gew.-% der Fragmente der gefertigten Produkte durch ein Sieb mit einer Maschenweite von 3 mm hindurchgehen.

## Revendications

1. Un procédé de compostage de produits manufacturés, comprenant :
la réception de produits manufacturés en matériaux compostables ;
la pulvérisation des produits manufacturés pour obtenir une suspension grossière comprenant les produits manufacturés pulvérisés ;
l'autoclavage de la suspension grossière dans un appareil d'autoclavage, dans lequel l'étape d'autoclavage comprend l'application de vapeur saturée sous pression pendant au moins 15 minutes ;
le mélange de la suspension grossière autoclavée et de matière organique pour donner de l'humus ; et
le compostage de l'humus dans un appareil de compostage pour produire du compost,
dans lequel les produits manufacturés comprennent un ou plusieurs des éléments suivants : chaussures, habits et vêtements, et
dans lequel la pulvérisation est effectuée hydrauliquement ou mécaniquement,
afin de produire des fragments de produits manufacturés ayant une taille de particules telle qu'au moins 80 % en poids des fragments de produits manufacturés passent à travers un tamis ayant une taille de maille de 3 mm.

2. Procédé de compostage des produits manufacturés selon la revendication 1, dans lequel la pulvérisation est effectuée par pulvérisation à jet d'eau ou par un granulateur.

3. Procédé de compostage de produits manufacturés selon la revendication 1, dans lequel la pulvérisation est effectuée par un appareil de pulvérisation incluant un broyage mécanique.

4. Procédé de compostage de produits manufacturés selon la revendication 1, comprenant une étape de détection et d'élimination des corps étrangers pour éliminer les produits manufacturés du procédé ultérieur ou pour éliminer de la suspension les parties des produits manufacturés qui contiennent des corps étrangers non compostables.

5. Procédé de compostage de produits manufacturés selon la revendication 4, dans lequel l'étape de détection et d'élimination des corps étrangers comprend un détecteur de métaux.

6. Procédé de compostage de produits manufacturés selon la revendication 1, comprenant une étape de criblage qui sépare du compost tous les fragments de produits manufacturés dont la taille est supérieure à une taille prédéterminée et qui renvoie les fragments de produits manufacturés séparés vers les étapes de pulvérisation, d'autoclavage et de compostage.

7. Procédé de compostage de produits manufacturés selon la revendication 1, comprenant une étape de vérification des produits manufacturés qui vérifie que chacun des produits manufacturés est d'un type en matériaux compostables.

8. Procédé de compostage de produits manufacturés selon la revendication 1 étant un procédé discontinu, dans lequel chaque lot de compost produit est testé pour la croissance des semis.

9. Procédé de compostage de produits manufacturés selon la revendication 1, comprenant :
la fabrication desdits produits manufacturés en matériaux compostables.

10. Procédé de compostage de produits manufacturés selon la revendication 9, comprenant :
l'association physique d'un identifiant lisible aux produits manufacturés lors de l'étape de fabrication ;
la gestion d'une base de données des identifiants physiquement associés aux produits manufacturés compostables ;
une étape de vérification des produits manufacturés qui lit l'identifiant de chacun des produits manufacturés lorsque l'identifiant est présent et vérifie que l'identifiant lu est inclus dans la base de données, dans laquelle l'étape de vérification des produits manufacturés se situe après l'étape de réception et avant l'étape de pulvérisation ; et
retirer les produits manufacturés qui ne peuvent pas être vérifiés par l'étape de vérification des produits manufacturés avant l'étape de pulvérisation.

11. Procédé de cycle de vie de produits manufacturés selon la revendication 9, dans lequel la pulvérisation est effectuée par pulvérisation à jet d'eau.

12. Système de compostage de produits manufacturés, comprenant :
un appareil de pulvérisation pour pulvériser les produits manufacturés en une suspension grossière comprenant des fragments de produits manufacturés ;
un appareil d'autoclavage pour autoclaver la suspension grossière, dans lequel l'étape d'autoclavage comprend l'application de vapeur saturée sous pression pendant au moins 15 minutes ;
une étape de prémélange pour mélanger la suspension grossière autoclavée et la matière organique afin de produire de l'humus ; et
un appareil de compostage pour composter l'humus, donnant ainsi du compost,
dans lequel les produits manufacturés comprennent un ou plusieurs des éléments suivants : chaussures, habits et vêtements,
et dans lequel ledit appareil de pulvérisation est un appareil de pulvérisation hydraulique ou mécanique, lesdits fragments de produits manufacturés produits ayant une taille de particules telle qu'au moins 80 % en poids des fragments de produits manufacturés passent à travers un tamis ayant une taille de maille de 3 mm.
